(19) Europäisches Patentamt / European Patent Office / Office européen des brevets

(11) **EP 4 305 389 B1**

(12) **FASCICULE DE BREVET EUROPEEN**

(45) Date de publication et mention
de la délivrance du brevet:
**06.05.2026 Bulletin 2026/19**

(21) Numéro de dépôt: **22711071.5**

(22) Date de dépôt: **08.03.2022**

(51) Classification Internationale des Brevets (IPC):
**G01G 19/02** *(2006.01)*

(52) Classification Coopérative des Brevets (CPC):
**G01G 19/022**

(86) Numéro de dépôt international:
**PCT/EP2022/055955**

(87) Numéro de publication internationale:
**WO 2022/189468 (15.09.2022 Gazette 2022/37)**

(54) **PROCEDE DE DETECTION D'UN ETAT DE MASSE EXCESSIVE D'UN VEHICULE AUTOMOBILE ET METHODE DE GESTION DE LA CHARGE D'UNE BATTERIE DE TRACTION**

DETEKTIONSVERFAHREN EINES ÜBERHÖHTEN MASSEZUSTANDS EINES FAHRZEUGES UND VERWALTUNGSVERFAHREN VON DER AUFLADUNG EINER TRAKTIONSBATTERIE

DETECTION METHOD OF AN EXCESSIVE MASS STATUS OF A VEHICLE AND CHARGE CONTROL METHOD OF A TRACTION BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2021 FR 2102328**

(43) Date de publication de la demande:
**17.01.2024 Bulletin 2024/03**

(73) Titulaire: **Ampere SAS**
**92100 Boulogne-Billancourt (FR)**

(72) Inventeurs:
• **MOUJIB, Abdelkrim**
**78084 GUYANCOURT (FR)**
• **ROUDEAU, Frederic**
**78084 GUYANCOURT (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
FR-A1- 2 822 972      FR-A1- 3 012 397
JP-A- 2017 501 918    US-B2- 10 480 645

EP 4 305 389 B1

## Description

## Domaine technique de l'invention

La présente invention concerne un procédé de détection d'un état de masse excessive d'un véhicule automobile.

L'invention concerne aussi une méthode de gestion de la charge d"une batterie de traction équipant un tel véhicule.

## Arrière-plan technique

Classiquement, un véhicule dit à motorisation hybride utilise la combinaison d'une motorisation thermique produite par un moteur thermique avec une motorisation électrique produite par au moins un moteur électrique qui est alimenté au moins en partie par une batterie électrique dite de traction.

Un véhicule hybride utilise trois types de traction :

- une traction en mode électrique selon laquelle seul le moteur électrique assure le mouvement du véhicule,
- une traction en mode hybride selon laquelle le moteur thermique intervient pour soutenir le moteur électrique,
- une traction en mode thermique selon laquelle seul le moteur thermique assure le mouvement du véhicule.

Le rôle de la batterie de traction est de stocker l'énergie nécessaire au bon fonctionnement du véhicule hybride et son type de recharge dépend de l'architecture du véhicule hybride utilisée.

Les principales architectures de véhicule hybride sont les suivantes :

- hybride série : le ou les moteurs électriques assurent l'entrainement des roues et le moteur thermique de taille réduite a exclusivement un rôle de générateur d'électricité pour la recharge de la batterie de traction.
- hybride parallèle : une des architectures les plus utilisées de nos jours dont le fonctionnement s'appuie sur une utilisation en parallèle des moteurs thermique et électrique, tous reliés à la transmission du véhicule. Lors du roulage du véhicule, la recharge de la batterie de traction s'effectue par une récupération régulière de l'énergie lors des phases de ralentissement et de freinage du véhicule, communément appelées phases de freinage régénératif ;
- hybride série-parallèle : cette architecture s'appuie sur la combinaison d'un moteur thermique et d'un moteur électrique, chacun étant connecté indépendamment à la transmission du véhicule, la traction du véhicule étant soit électrique, soit thermique.

En fonction de l'architecture du véhicule hybride utilisée, l'alternance entre les tractions électrique, hybride et thermique est gérée automatiquement par une unité de contrôle implémentée dans le véhicule, en fonction principalement de l'enfoncement de la pédale d'accélérateur par le conducteur et du niveau de charge de la batterie de traction.

La stratégie de gestion de la charge de la batterie de traction du véhicule est gérée par une loi de gestion de l'énergie embarquée dans l'unité de contrôle et elle permet, via un calcul d'un niveau d'énergie électrique cible, de commander la charge ou la décharge de la batterie de traction de manière à maintenir une prestation de conduite satisfaisante perçue par le conducteur du véhicule qui est liée à différents paramètres tels que la consommation de carburant du véhicule, l'autonomie du mode de traction électrique et les performances nominales du véhicule.

Par ailleurs, certaines situations temporaires exceptionnelles de roulage requièrent davantage de puissance pour assurer la traction du véhicule, notamment en fonction de la physionomie du terrain comme par exemple dans le cas d'une pente montante élevée (roulage en côte) ou bien des conditions de vent fort. Dans ces situations temporaires de roulage, le dimensionnement de la batterie de traction ne permet pas d'assurer la traction du véhicule pendant une longue durée, car le niveau de charge de la batterie diminue plus rapidement que dans une situation de roulage nominale.

Par conséquent, lorsque la batterie de traction est totalement déchargée, la traction du véhicule est alors prise en charge totalement par le moteur thermique qui n'est pas dimensionné pour assurer la pleine performance de roulage du véhicule. Par conséquent, la prestation de conduite perçue par le conducteur du véhicule est altérée.

Afin d'éviter les phénomènes de régression des performances du véhicule, le niveau d'énergie dans la batterie de traction est régulièrement augmenté afin de constituer une réserve d'énergie pour répondre à des situations temporaires de roulage du véhicule. Le maintien de cette réserve d'énergie est possible parce que les pleines performances du véhicule ne sont requises que temporairement et à une faible fréquence. En effet, un trajet est le plus souvent effectué dans des conditions nominales et est régulièrement ponctué par des phases de freinage, de ralentissement permettant ainsi la reconstitution de la réserve d'énergie de la batterie de traction.

Toutefois, dans le cas d'un état de masse excessive du véhicule tel que l'embarquement d'une masse supplémentaire (passagers, bagages...) ou bien la traction d'une masse roulante additionnelle (remorque, caravane...), lorsque le véhicule rencontre une situation temporaire de roulage exceptionnelle, la réserve d'énergie n'est pas suffisante pour assurer la traction du véhicule en état de « masse excessive ».

Afin de procéder à la recharge de la batterie de traction à un niveau d'énergie suffisamment élevé, sans altérer les performances du véhicule, il est alors indispensable de détecter un état de masse excessive du véhicule bien avant que le véhicule rencontre une situation temporaire de roulage qui requiert davantage de puissance.

Différents procédés de détection de la masse excessive d'un véhicule sont connus. Par exemple, le document FR2822972 présente un dispositif d'estimation de la masse d'un véhicule qui est basé sur un calcul de force différentielle suivant le principe fondamental de la dynamique. Un tel dispositif de détection prend également en compte les paramètres extérieurs tels que l'effet du vent sur le véhicule ou bien encore la déclivité du terrain. Ce type de procédé de détection ne permet pas de détecter précisément si le véhicule est dans un état de masse excessive ou non.

De plus, la majorité des procédés de détection utilisent des capteurs localisés par exemple au niveau des roues du véhicule. Cependant, ce type de capteurs est intrusif et une quelconque défaillance d'un capteur peut altérer complètement la détection d'un état de masse excessive du véhicule.

L'invention propose notamment de remédier aux inconvénients mentionnés et de proposer un procédé de détection à la fois précis et fiable d'un état de masse excessive d'un véhicule automobile équipé d'une batterie de traction pour répondre à des situations temporaires exceptionnelles de roulage du véhicule sans altérer la prestation de conduite perçue par le conducteur du véhicule, en gérant la charge de la batterie de traction du véhicule dans un état de masse excessive.

**Résumé de l'invention**

L'invention propose un procédé de détection d'un état de masse excessive d'un véhicule automobile équipé d'un groupe motopropulseur comportant une batterie de traction. Le procédé de détection consiste à sélectionner un nombre déterminé de phases d'accélération longitudinale du véhicule pour chacune desquelles l'accélération longitudinale est supérieure à une valeur de seuil d'accélération longitudinale. Le procédé de détection comprend pour chaque phase d'accélération sélectionnée:

- une étape de calcul d'une valeur moyenne d'une force différentielle qui est égale à la valeur des efforts de traction du groupe motopropulseur à laquelle sont soustraites la valeur de la force résultante d'accélération longitudinale du véhicule et la valeur de la somme des efforts résistants subis par le véhicule lors du roulage,
- une étape de calcul d'une valeur statistique à partir des valeurs moyennes calculées de la force différentielle, et
- une étape de comparaison de la valeur statistique calculée avec une valeur de seuil de masse excessive du véhicule,

procédé de détection selon lequel le véhicule est considéré dans un état de masse excessive si la valeur statistique est supérieure à la valeur de seuil de masse excessive du véhicule.

- la valeur statistique est une moyenne de toutes les valeurs moyennes calculées de la force différentielle.

Selon d'autres caractéristiques du procédé de détection :

- le seuil d'accélération longitudinale est supérieure ou égale à 0,5 m/s$^2$ ;
- la sélection des phases d'accélération longitudinale est inhibée lorsque la vitesse du véhicule est supérieure à une valeur de seuil de vitesse ;
- la valeur de seuil de vitesse est supérieure ou égale à 90 km/h ;
- le nombre de phases d'accélération longitudinale sélectionnées est une valeur associée au véhicule automobile ;
- la valeur de seuil de masse excessive du véhicule est une valeur constante associée au véhicule automobile ;
- la force résultante d'accélération longitudinale est définie par le produit de la valeur constante d'une masse de référence du véhicule par la valeur de l'accélération longitudinale du véhicule ;
- les efforts résistants sont définis par la somme des forces de traînée aérodynamiques du véhicule, des forces de résistance au roulement du véhicule et des forces liées à la déclivité du terrain.

L'invention propose aussi une méthode de gestion de la charge d'une batterie de traction d'un véhicule automobile qui consiste à détecter un état éventuel de masse excessive du véhicule et, lorsqu'un état de masse excessive est détecté, à augmenter le niveau d'énergie stockée dans la batterie de traction jusqu'à un seuil de charge, pour répondre à des situations temporaires de roulage du véhicule.

Selon une autre caractéristique de la méthode de gestion, la détection d'un état éventuel de masse excessive du véhicule est réalisée par le procédé de détection. L'invention propose de plus, un groupe motopropulseur comportant un moteur thermique et un moteur électrique associé à une batterie de traction, la charge de batterie de traction est commandée par la méthode de gestion.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[fig.1] - la [fig.1] est une représentation schématique de l'interaction des principaux éléments intervenant dans la méthode de gestion de la charge d'une batterie de traction du véhicule selon l'invention;

[fig.2] - la [fig.2] est un diagramme des étapes de la détection d'un état de masse excessive d'un véhicule automobile associée à la méthode de gestion de la charge d'une batterie de traction du véhicule selon l'invention ;

[fig.3] - la [fig.3] est une représentation schématique du procédé de détection d'un état de masse excessive d'un véhicule selon l'invention ;

[fig.4A] - la [fig.4A] est un diagramme représentant la variation de la vitesse du véhicule en fonction du temps, l'association de la [fig.4A] avec les figures 4B et 4C illustre un exemple d'application du procédé de détection d'un état de masse excessive d'un véhicule selon l'invention ;

[fig.4B] - la [fig.4B] est un diagramme représentant la variation de l'accélération longitudinale du véhicule en fonction du temps ;

[fig.4C] - la [fig.4C] est un diagramme représentant la variation de la valeur calculée de la force différentielle du véhicule en fonction du temps.

**Description détaillée de l'invention**

Dans la description qui va suivre, des éléments identiques, similaires ou analogues seront désignés par les mêmes références alphanumériques.

L'invention concerne un véhicule automobile comportant un groupe motopropulseur équipé d'une batterie de traction 14.

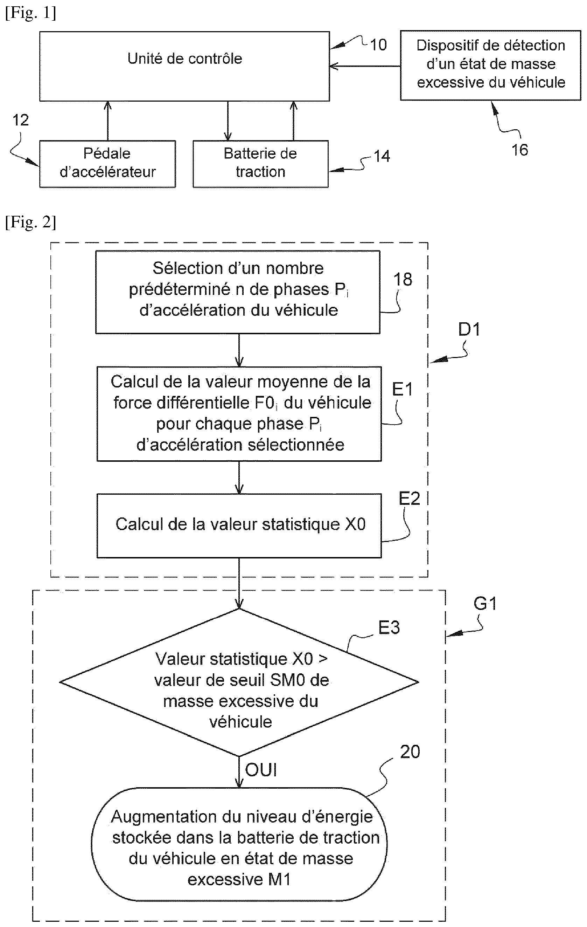

Tel que représenté à la [fig.1], une unité de contrôle 10, ou calculateur, implémentée dans le véhicule, supervise le niveau de la charge en énergie électrique et la recharge de la batterie de traction 14.

Une pédale d'accélérateur 12 envoie une donnée à l'unité de contrôle 10 concernant l'enfoncement de la pédale d'accélérateur 12 par le conducteur du véhicule. La batterie de traction 14 envoie une donnée à l'unité de contrôle 10 concernant le niveau de charge de la batterie de traction 14.

Un dispositif ou circuit de détection 16 d'un état de masse du véhicule mettant en œuvre un procédé de détection D1 envoie une donnée à l'unité de contrôle 10 représentative de la masse du véhicule, particulièrement pour déterminer si le véhicule est dans un état de masse excessive M1, ou non.

La méthode de gestion G1 de la charge de la batterie de traction 14 du véhicule est gérée par une loi de gestion de l'énergie embarquée dans l'unité de contrôle 10 et elle permet, via un calcul d'un niveau d'énergie électrique cible, de piloter la recharge ou la décharge de la batterie de traction 14, notamment en fonction de l'enfoncement de la pédale d'accélérateur 12, du niveau de charge de la batterie de traction 14 et de l'état de masse excessive M1 éventuellement détecté par le dispositif de détection 16.

La méthode de gestion G1 de la charge de la batterie de traction 14 consiste à détecter un état de masse excessive M1 du véhicule, de l'ordre de plusieurs centaines de kilogrammes et, lorsqu'un état de masse excessive M1 est détecté, à augmenter (Etape 20 - [fig.2]) le niveau d'énergie stockée dans la batterie de traction 14 jusqu'à une valeur de seuil de charge suffisante pour répondre à des situations temporaires exceptionnelles de roulage du véhicule.

Lorsque le profil de roulage est favorable, par exemple pendant un roulage de type urbain, préférentiellement pour ne pas altérer les performances du véhicule, la gestion de la charge de la batterie de traction 14 est pilotée par l'unité de contrôle 10 de manière à augmenter 20 le niveau d'énergie dans la batterie de traction jusqu'à un niveau de charge suffisamment élevé. L'objectif de l'invention est de constituer une réserve d'énergie avant que le véhicule ne rencontre une situation temporaire de roulage qui requiert davantage de puissance et qu'ainsi le véhicule puisse exploiter la réserve d'énergie constituée le cas échéant.

Le procédé de détection D1 d'un état de masse excessive M1 du véhicule selon l'invention associé à la méthode de gestion G1 de la charge de la batterie de traction 14 est illustré à la [fig.2].

Le procédé de détection D1 d'un état de masse excessive M1 du véhicule consiste à sélectionner 18 un nombre déterminé n de phases Pi d'accélération longitudinale du véhicule pour chacune desquelles l'accélération longitudinale est supérieure à une valeur de seuil SAO d'accélération longitudinale prédéterminée.

Pour chaque phase Pi d'accélération longitudinale sélectionnée, le procédé de détection D1 comprend les étapes successives suivantes :

- une étape E1 de calcul d'une valeur moyenne d'une force différentielle F0i
- une étape E2 de calcul d'une valeur statistique X0 à partir des valeurs moyennes F0i calculées de la force différentielle, et
- une étape E3 de comparaison de la valeur statistique X0 calculée avec une valeur de seuil SMO de masse excessive du véhicule.

A l'issue de l'étape E3 de comparaison, le véhicule est considéré comme étant dans un état de masse excessive M1 si la valeur statistique X0 est supérieure à la valeur de seuil SMO de masse excessive.

La détection d'un état de masse excessive M1 du véhicule par le procédé de détection D1 provoque l'augmentation 20 du niveau d'énergie stockée dans la batterie de traction 14 via la méthode de gestion G1 de la charge de la batterie de traction 14. Le niveau d'énergie stockée dans la batterie de traction 14 doit atteindre une valeur de seuil de charge suffisante pour répondre à des situations temporaires exceptionnelles de roulage du véhicule et être maintenu pendant toute la durée du roulage du véhicule considéré comme étant dans un état de masse excessive M1.

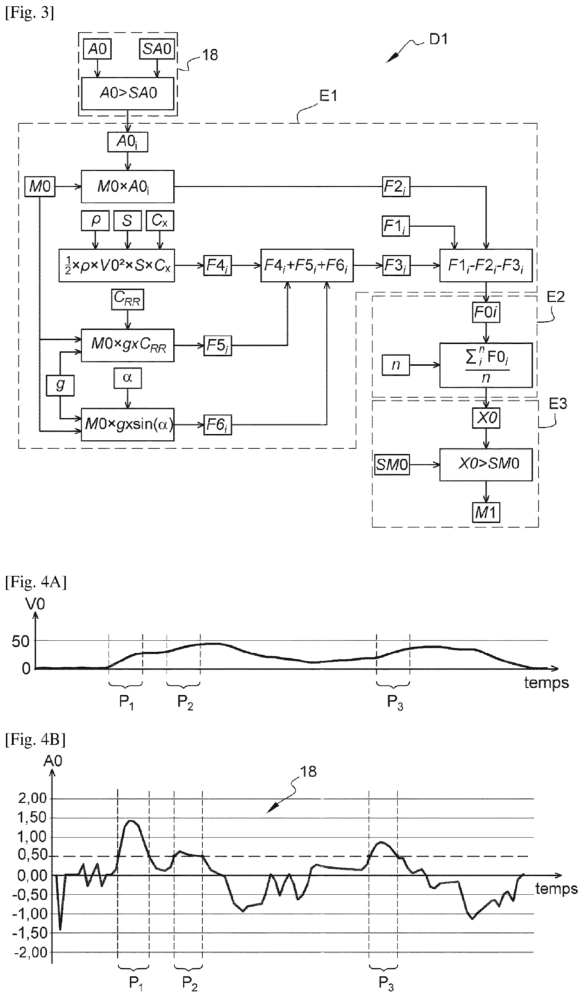

La force différentielle F0 est calculée via un algorithme de calcul suivant les équations décrites à la [fig.3].

Sélection 18 d'un nombre n prédéterminé de phases Pi d'accélération longitudinale du véhicule :

$$A0 > SA0 \rightarrow A0_i$$

Avec :

- $A0$ : accélération longitudinale du véhicule en $m.s^{-2}$,
- $SA0$: valeur de seuil d'accélération longitudinale en $m.s^{-2}$,
- $A0_i$ : accélération longitudinale du véhicule lors de la $i_{ème}$ phase Pi d'accélération longitudinale sélectionnée en $m.s^{-2}$.

La valeur de l'accélération A0 du véhicule doit être suffisamment élevée pour obtenir des données exploitables. Selon un exemple de réalisation de l'invention, la valeur de seuil SAO d'accélération longitudinale est supérieure ou égale à 0,5 m/s². Une phase Pi d'accélération longitudinale débute lorsque la valeur de l'accélération longitudinale A0 du véhicule est supérieure à la valeur de seuil SAO d'accélération longitudinale et se termine dès que la valeur de l'accélération longitudinale A0 est inférieure à la valeur de seuil SA0.

Calcul E1 d'une valeur moyenne de la force différentielle F0i :

$$F0_i = F1_i - F2_i - F3_i$$

Avec :

- i : $i_{ème}$ phase Pi d'accélération longitudinale sélectionnée,
- F0i : force différentielle en N (Newton),
- F1i : effort de traction du groupe motopropulseur en N,
- F2i : force résultante d'accélération longitudinale du véhicule en N,
- F3i : effort résistant en N.

Calcul de la valeur efforts de traction du groupe motopropulseur F1i :

$$F1_i = \times C_m \times \frac{\omega_m}{\omega_r \times R}$$

Avec :

- η : rendement de la transmission,
- Cm : couple moteur en $N.m^{-1}$,
- ωm : vitesse de rotation du moteur du véhicule en $m.s^{-1}$,

- ωr : vitesse de rotation des roues du véhicule en $m.s^{-1}$,
- R : rayon des roues du véhicule en $m$.

Dans le cas d'un véhicule hybride, le moteur comprend un moteur thermique et un moteur électrique. La force de traction désigne la force qui s'exerce à la périphérie des roues motrices au contact du sol pour assurer le mouvement du véhicule. La force de traction a pour fonction de produire le mouvement et la vitesse du véhicule.

Calcul de la valeur de la force résultante d'accélération du véhicule F2i :

$$MO \times A0_i$$

Avec :

- M0 : masse de référence du véhicule en $kg$,
- $A0_i$ : accélération longitudinale du véhicule à la $i_{ème}$ phase Pi d'accélération longitudinale sélectionnée en $m.s^{-2}$.

La masse M0 de référence du véhicule est définie comme étant la masse minimale constante du véhicule, c'est-à-dire à la masse du véhicule en ordre de marche additionnée de la masse standard de deux personnes à bord. La masse du véhicule en ordre de marche est sa masse incluant : les consommables, les fluides fonctionnels tel que l'huile et le liquide de refroidissement, la roue de secours ainsi que le conducteur du véhicule. La masse standard du conducteur et des passagers est fixée à 75 kg. Pour le calcul de la moyenne de la force différentielle F0i, la valeur de la masse M0 de référence du véhicule est une valeur constante prédéfinie associée au modèle de véhicule automobile.

Calcul de la valeur des efforts résistants F3i :

$$F3_i = F4_i + F5_i + F6_i$$

Avec :

- $F4i$ : force de traînée aérodynamique en N
- $F5i$ : force de résistance de roulement en N
- $F6i$ : force liée à la déclivité du terrain en N ;

  -- Calcul de la force de traînée aérodynamique F4i :

$$F4_i = \frac{1}{2} \times \rho \times V0^2 \times S \times C_x$$

Avec :

- $\rho$ : masse volumique de l'air en $kg.m^{-3}$,
- S : surface de référence en $m^2$,
- $C_x$ : coefficient aérodynamique,
- $V0$ : vitesse du véhicule en $m.s^{-1}$;

La force de traînée aérodynamique F4i désigne la force de frottement de l'air dans la direction opposée à la vitesse du véhicule. La valeur de la force aérodynamique F4i dépend directement du profil aérodynamique du véhicule, celui-ci pouvant être modifié par exemple par la mise en place de barres de toit ou d'un coffre de toit sur le véhicule, ou encore la traction d'une remorque ou bien d'une caravane.

-- Calcul de la force de résistance de roulement F5i :

$$F5_i = M0 \times g \times C_{RR}$$

Avec :

- $M0$ : masse de référence du véhicule en *kg*,
- $g$ : gravité terrestre,
- $C_{RR}$ : coefficient de résistance au roulement ;

La force de résistance au roulement F5i du véhicule est une force liée essentiellement à la déformation du pneumatique lors du roulage du véhicule. Pour le calcul de la moyenne de la force différentielle F0i, la valeur du coefficient de résistance au roulement $C_{RR}$ est une valeur constante prédéfinie associée au modèle de véhicule automobile.

-- Calcul de la force liée à la déclivité du terrain F6i :

$$F6_i = M0 \times g \times \sin\ (\alpha)$$

Avec :

- $M0$ : masse de référence du véhicule en *kg*,
- $g$ : gravité terrestre,
- $\alpha$ : déclivité du terrain en degré.

La force liée à la déclivité du terrain F6i dépend directement de la physionomie du terrain c'est-à-dire dans le cas d'une pente montante ou descendante. Pour le calcul de la moyenne de la force différentielle F0i, la valeur de la déclivité $\alpha$ du terrain est une valeur constante nulle.

La force différentielle F0i est une grandeur obtenue selon le principe fondamentale de la dynamique($\sum \overrightarrow{F_{ext}} = m \times \vec{a}$).

Dans des conditions nominales de roulage du véhicule, la valeur de la force différentielle F0i réelle est nulle.

Dans une situation temporaire de roulage du véhicule, c'est-à-dire en cas d'une pente montante élevée, de vent fort ou bien d'un état de masse excessive M1 du véhicule, les valeurs de la force résultante F2i d'accélération longitudinale et/ou des efforts résistant F3i augmentent.

Par conséquent, la valeur des efforts de traction F1i du groupe motopropulseur augmente proportionnellement pour compenser les efforts résistants F3i exercés sur le véhicule et qui sont liés à la force de traînée aérodynamique F4i, à la force de résistance de roulement F5i et à la déclivité du terrain F6i, et/ou pour compenser la force résultante F2i d'accélération longitudinale liée à la masse du véhicule pour maintenir une valeur de la force différentielle F0i réelle nulle.

Par ailleurs, le calcul de la force différentielle F0i prend en compte des grandeurs prédéfinies pour les calculs des valeurs des efforts résistants F3i et de la force résultante F2i d'accélération longitudinale. Par conséquent, dans une situation temporaire de roulage, la valeur moyenne de la force différentielle F0i calculée devient supérieure à zéro.

Afin de détecter un état de masse excessive M1 du véhicule, le calcul de la force différentielle F0i doit être réalisé à partir des données acquises pendant une phase Pi d'accélération longitudinale car la valeur de la masse de référence M0 du véhicule a une grande influence dans le calcul de la force résultante F2i d'accélération longitudinale.

Par ailleurs, le nombre n de phases Pi d'accélération longitudinale sélectionnées est une valeur associée au véhicule automobile. La valeur de n doit être suffisamment grande afin d'obtenir un large échantillon permettant ainsi d'éliminer des situations ponctuelles de roulages non nominales, telles que en cas de pente montante élevée ou bien de vent fort. Plus l'échantillon est large, plus les valeurs des efforts résistants F3i se compensent et s'annulent au cours du roulage du véhicule. Cela permet d'obtenir une valeur de la force différentielle liée uniquement à la force résultante de l'accélération et donc à la masse du véhicule.

Calcul E2 d'une valeur moyenne totale X0 :

$$X0 = \frac{\sum_{i}^{n} F0_i}{n}$$

Avec :

- $X0$ : valeur statistique en N,
- $F0i$ : force différentielle en N,
- $i$ : $i_{ème}$ phase Pi d'accélération longitudinale sélectionnée,
- $n$ : nombre total de phases Pi d'accélération longitudinale.

Selon un exemple de réalisation de l'invention, la valeur statistique X0 est une moyenne de toutes les valeurs moyennes F0i calculées de la force différentielle pour filtrer les valeurs moyennes F0i de la force différentielle et éliminer les valeurs non représentatives, et par exemple une moyenne arithmétique.

Comparaison E3 de la valeur statistique X0 avec la valeur de seuil SMO de masse excessive du véhicule :

$$X0 > SMO$$

A l'issu de l'étape E3 de comparaison, le véhicule est détecté comme étant dans un état de masse excessive M1 si la valeur statistique X0 est supérieure à la valeur de seuil SMO de masse excessive.

La valeur de seuil SMO de masse excessive du véhicule est une valeur constante associée au modèle de véhicule automobile, cette valeur étant généralement déterminée au moyen d'essais physiques réalisés pour chaque modèle de véhicule automobile.

Le procédé de détection D1 d'un état de masse excessive M1 du véhicule est lancé à chaque démarrage du véhicule automobile et il est réalisé au maximum une fois lors de chaque roulage du véhicule.

La sélection 18 des phases Pi d'accélération longitudinale est inhibée lorsque la vitesse V0 du véhicule est supérieure à une valeur de seuil SVO de vitesse. La valeur de seuil SVO de vitesse correspond par exemple à une vitesse sur une voie rapide telle qu'une autoroute. Préférentiellement, le procédé de détection D1 est configuré pour des valeurs de vitesse V0 du véhicule correspondant à un roulage de type urbain. En effet lorsque le véhicule atteint des valeurs de vitesse V0 élevées, les phases $P_i$ d'accélération longitudinales sont plus rares et plus faibles.

Selon un exemple de réalisation de l'invention, la valeur de seuil SVO de vitesse est supérieure ou égale à 90 km/h, valeur dépendant directement de la législation du pays de commercialisation du véhicule.

Selon un premier mode de configuration de l'invention, lorsque le véhicule atteint une vitesse V0 supérieure ou égale à la valeur de seuil SVO de vitesse, le procédé de détection D1 d'un état de masse excessive M1 du véhicule est interrompu pendant toute la durée du roulage du véhicule.

Selon un deuxième mode de configuration de l'invention, lorsque le véhicule atteint une vitesse V0 supérieure ou égale à la valeur de seuil SVO de vitesse, le procédé de détection D1 est interrompu jusqu'à ce que la vitesse V0 du véhicule soit inférieure à la valeur de seuil SVO de vitesse.

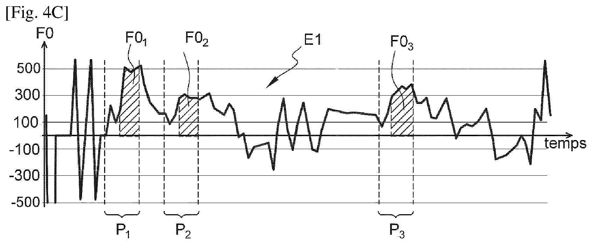

L'association des figures 4A, 4B et 4C illustre un exemple d'application du procédé de détection D1 d'un état de masse excessive M1 d'un véhicule avec les données d'entrée suivantes :

- masse de référence M0 du véhicule,
- variation de la vitesses V0 du véhicule en fonction du temps : [fig.4A],
- variation de l'accélération longitudinale A0 du véhicule en fonction du temps : [fig.4B],
- valeur de seuil SAO d'accélération longitudinale : 0,5 m/s$^2$,
- nombre de phases $P_i$ d'accélération longitudinale n : 3,
- valeur de seuil SMO de masse excessive du véhicule.

L'unité de contrôle 10 du véhicule reçoit une information concernant la vitesse V0 du véhicule et en déduit l'accélération longitudinale A0 du véhicule pour sélectionner 18 un nombre prédéfini de trois phases $P_1$, $P_2$ et $P_3$ d'accélération longitudinale du véhicule selon lesquelles l'accélération longitudinale A0 est supérieure à la valeur de seuil SAO d'accélération longitudinale de 0,5 m/s$^2$.

Le procédé de détection D1 :

- calcul E1 des valeurs moyennes de la force différentielle $F0_i$ pour chacune des phases $P_1$, $P_2$ et $P_3$ d'accélération longitudinale: $F0_1$, $F0_2$ et $F0_3$ ;
- calcul E2 de la valeur statistique X0 ([fig.4C]) qui correspond à la moyenne de toutes les valeurs moyennes calculées de la force différentielle $F0_{1 à 3}$ :

$$X0 = \frac{\sum_{i=1}^{3} F0_i}{3}$$

- comparaison E3 de la valeur statistique X0 avec une valeur de seuil SMO de masse excessive M1 du véhicule :

-- si $X0 > 150N$, le véhicule est considéré dans un état de masse excessive M1 et la méthode de gestion G1 procède à l'augmentation 20 du niveau d'énergie stockée dans la batterie de traction 14 du véhicule jusqu'à un seuil de charge suffisant pour répondre à des situations temporaires exceptionnelles de roulage du véhicule, ou

-- si X0 < 150N, le véhicule n'est pas considéré dans un état de masse excessive M1 et la méthode de gestion G1 n'intervient pas car le niveau d'énergie stockée dans la batterie de traction 14 du véhicule est suffisant pour répondre à des situations temporaires exceptionnelles de roulage du véhicule du fait que la masse du véhicule n'est

pas excessive.

La détection d'un état de masse excessive M1 d'un véhicule par un procédé de détection D1 selon l'invention via un calcul de force différentielle à partir d'une valeur constante de la masse M0 de référence du véhicule permet d'obtenir une information fiable et précise sur la masse du véhicule.

L'association d'un tel procédé de détection D1 avec une méthode de gestion G1 de la charge de la batterie de traction 14 permet de procéder à la recharge de la batterie de traction 14 avant que le véhicule ne rencontre une situation temporaire exceptionnelle de roulage qui requiert davantage de puissance.

L'anticipation de la constitution d'une réserve d'énergie dans le cas d'un état de masse excessive M1 du véhicule permet de maintenir une prestation de conduite satisfaisante perçue par le conducteur du véhicule.

De plus, une telle stratégie ne requiert l'utilisation d'aucun capteur pour constituer la réserve d'énergie électrique de la batterie de traction 14.

LEGENDE :

> 10 : unité de contrôle
>
> 12 : pédale d'accélérateur
>
> 14 : batterie de traction
>
> 16 : dispositif de détection d'un état de masse excessive du véhicule
>
> 18 : sélection d'un nombre prédéterminé de phases d'accélération longitudinale du véhicule
>
> $F0_i$ : force différentielle
>
> $F1_i$ : effort de traction
>
> $F2_i$ : force résultante
>
> $F3_i$ : effort résistant
>
> $F4_i$ force de traînée aérodynamique
>
> $F5_i$ : force de résistance de roulement
>
> $F6_i$ : force liée à la déclivité du terrain
>
> D1 : procédé de détection d'un état de masse excessive du véhicule
>
> G1 : méthode de gestion de la charge d'une batterie de traction du véhicule
>
> $P_i$ : phase d'accélération longitudinale
>
> n : nombre de phases d'accélération longitudinale
>
> X0 : moyenne statistique
>
> M0 : masse de référence du véhicule
>
> SMO : valeur de seuil de masse excessive du véhicule
>
> V0 : vitesse du véhicule
>
> SVO : valeur de seuil de vitesse
>
> A0 : accélération longitudinale du véhicule
>
> SAO : valeur de seuil d'accélération longitudinale
>
> E1 : calcul d'une valeur moyenne d'une force différentielle
>
> E2 : calcul d'une valeur statistique
>
> E3 : comparaison de la valeur statistique avec une valeur de seuil de masse excessive du véhicule
>
> 20 : augmentation du niveau d'énergie stockée dans la batterie de traction

**Revendications**

1. Procédé de détection (D1) d'un état de masse excessive (M1) d'un véhicule automobile équipé d'un groupe motopropulseur comportant une batterie de traction (14),

   > **caractérisé en ce que** le procédé de détection (D1) consiste à sélectionner (18) un nombre déterminé (n) de phases ($P_i$) d'accélération longitudinale du véhicule pour chacune desquelles l'accélération longitudinale est supérieure à une valeur de seuil (SA0) d'accélération longitudinale,

et **en ce que** le procédé de détection (D1) comprend pour chaque phase ($P_i$) d'accélération longitudinale sélectionnée:

> - une étape (E1) de calcul d'une valeur moyenne d'une force différentielle ($F0_i$) qui est égale à la valeur des efforts de traction ($F1_i$) du groupe motopropulseur à laquelle sont soustraites la valeur de la force résultante ($F2_i$) d'accélération longitudinale du véhicule et la valeur de la somme des efforts résistants ($F3_i$) subis par le véhicule lors du roulage,
> - une étape (E2) de calcul d'une moyenne de toutes les valeurs moyennes ($F0i$) calculées de la force différentielle, et
> - une étape (E3) de comparaison de la valeur statistique (X0) calculée avec une valeur de seuil (SM0) de masse excessive du véhicule, procédé de détection (D1) selon lequel le véhicule est considéré dans un état de masse excessive (M1) si la valeur statistique (X0) est supérieure à la valeur de seuil (SM0) de masse excessive du véhicule.

2. Procédé de détection (D1) selon la revendication précédente, **caractérisé en ce que** la valeur de seuil (SA0) d'accélération longitudinale est supérieure ou égale à $0,5 \text{ m/s}^2$.

3. Procédé de détection (D1) selon l'une quelconque des revendications précédentes, **caractérisé en ce que** la sélection (18) des phases ($P_i$) d'accélération longitudinale est inhibée lorsque la vitesse (V0) du véhicule est supérieure à une valeur de seuil (SV0) de vitesse.

4. Procédé de détection (D1) selon l'une quelconque des revendications précédentes, **caractérisé en ce que** le nombre (n) de phases ($P_i$) d'accélération longitudinale sélectionnées est une valeur associée au véhicule automobile.

5. Procédé de détection (D1) selon l'une quelconque des revendications précédentes, **caractérisé en ce que** la force résultante ($F2_i$) d'accélération longitudinale est définie par le produit de la valeur d'une valeur constante d'une masse de référence du véhicule (M0) par la valeur de l'accélération longitudinale ($A0_i$) du véhicule.

6. Procédé de détection (D1) selon l'une quelconque des revendications précédentes, **caractérisé en ce que** les efforts résistants ($F3_i$) sont définis par la somme des forces de traînée aérodynamiques ($F4_i$) du véhicule, des forces de résistance au roulement ($F5_i$) du véhicule et des forces liées à la déclivité ($F6_i$) du terrain.

**Patentansprüche**

1. Verfahren zum Erkennen (D1) eines Zustands übermäßiger Masse (M1) eines Kraftfahrzeugs, das mit einem Antriebsstrang ausgestattet ist, der eine Antriebsbatterie (14) aufweist,

   **dadurch gekennzeichnet, dass** das Erkennungsverfahren (D1) darin besteht, eine bestimmte Anzahl (n) von Phasen ($P_i$) der Längsbeschleunigung des Fahrzeugs auszuwählen (18), bei denen die Längsbeschleunigung jeweils über einem Schwellenwert (SA0) für die Längsbeschleunigung liegt,
   und dass das Erkennungsverfahren (D1) für jede ausgewählte Phase ($P_i$) der Längsbeschleunigung Folgendes aufweist:

      - einen Schritt (E1) zum Berechnen eines Durchschnittswerts einer Differenzkraft ($F0_i$), die dem Wert der Zugkräfte ($F1_i$) des Antriebsstrangs entspricht, abzüglich dem Wert der resultierenden Kraft ($F2_i$) der Längsbeschleunigung des Fahrzeugs und dem Wert der Summe der Widerstandskräfte ($F3_i$), denen das Fahrzeug beim Fahren ausgesetzt ist,
      - einen Schritt (E2) zum Berechnen eines Durchschnitts aller berechneten Durchschnittswerte ($F0_i$) der Differenzkraft, und
      - einen Schritt (E3) zum Vergleichen des berechneten statistischen Werts (X0) mit einem Schwellenwert (SM0) für eine übermäßige Masse des Fahrzeugs,

   Erkennungsverfahren (D1), bei dem das Fahrzeug als in einem Zustand mit übermäßiger Masse (M1) angesehen wird, wenn der statistische Wert (X0) über dem Schwellenwert (SM0) für eine übermäßige Masse des Fahrzeugs liegt.

2. Erkennungsverfahren (D1) nach dem vorhergehenden Anspruch, **dadurch gekennzeichnet, dass** der Schwellenwert (SA0) für die Längsbeschleunigung größer oder gleich 0,5 m/s$^2$ ist.

3. Erkennungsverfahren (D1) nach einem der vorhergehenden Ansprüche, **dadurch gekennzeichnet, dass** die Auswahl (18) der Phasen ($P_i$) der Längsbeschleunigung unterbunden wird, wenn die Geschwindigkeit (V0) des Fahrzeugs einen Schwellenwert (SV0) für die Geschwindigkeit überschreitet.

4. Erkennungsverfahren (D1) nach einem der vorhergehenden Ansprüche, **dadurch gekennzeichnet, dass** die Anzahl (n) der ausgewählten Phasen ($P_i$) der Längsbeschleunigung ein dem Kraftfahrzeug zugeordneter Wert ist.

5. Erkennungsverfahren (D1) nach einem der vorhergehenden Ansprüche, **dadurch gekennzeichnet, dass** die resultierenden Kraft ($F2_i$) der Längsbeschleunigung durch das Produkt aus dem Wert eines konstanten Wertes einer Fahrzeug-Referenzmasse (M0) und dem Wert der Längsbeschleunigung ($A0_i$) des Fahrzeugs definiert ist.

6. Erkennungsverfahren (D1) nach einem der vorhergehenden Ansprüche, **dadurch gekennzeichnet, dass** die Widerstandskräfte ($F3_i$) durch die Summe der Luftwiderstandskräfte ($F4_i$) des Fahrzeugs, der Rollwiderstandskräfte ($F5_i$) des Fahrzeugs und der mit der Neigung des Geländes verbundenen Kräfte ($F6_i$) definiert sind.

**Claims**

1. Method for detecting (D1) a state of excessive weight (M1) of a motor vehicle equipped with a power train comprising a traction battery (14),

   **characterized in that** the detection method (D1) consists in selecting (18) a determined number (n) of phases ($P_i$) of longitudinal acceleration of the vehicle, for each of which the longitudinal acceleration is greater than a longitudinal acceleration threshold value (SA0), and **in that** the detection method (D1) comprises, for each selected longitudinal acceleration phase ($P_i$):

      - a step (E1) of calculation of an average value of a differential force ($F0_i$) which is equal to the value of the traction efforts ($F1_i$) of the power train from which are subtracted the value of the resultant longitudinal acceleration force ($F2_i$) of the vehicle and the value of the sum of the resisting efforts ($F3_i$) to which the vehicle is subjected while rolling,
      - a step (E2) of calculation of an average of all the calculated average values ($F0_i$) of the differential force, and
      - a step (E3) of comparison of the calculated statistical value (X0) with a threshold value (SM0) of excessive weight of the vehicle,

   detection method (D1) whereby the vehicle is considered to be in a state of excessive weight (M1) if the statistical value (X0) is greater than the threshold value (SM0) of excessive weight of the vehicle.

2. Detection method (D1) according to the preceding claim, **characterized in that** the threshold value (SA0) of longitudinal acceleration is greater than or equal to 0.5 m/s$^2$.

3. Detection method (D1) according to any one of the preceding claims, **characterized in that** the selection (18) of the longitudinal acceleration phases ($P_i$) is disabled when the speed (V0) of the vehicle is greater than a speed threshold value (SV0).

4. Detection method (D1) according to any one of the preceding claims, **characterized in that** the number (n) of longitudinal acceleration phases ($P_i$) selected is a value associated with the motor vehicle.

5. Detection method (D1) according to any one of the preceding claims, **characterized in that** the resultant longitudinal acceleration force ($F2_i$) is defined by the product of the value of a constant value of a reference weight of the vehicle (M0) by the value of the longitudinal acceleration ($A0_i$) of the vehicle.

6. Detection method (D1) according to any one of the preceding claims, **characterized in that** the resisting efforts ($F3_i$) are defined by the sum of the aerodynamic drag forces ($F4_i$) of the vehicle, of the rolling resistance forces ($F5_i$) of the vehicle and of the forces linked to the gradient ($F6_i$) of the terrain.

[Fig. 1]

```
┌─────────────────────────────────────────┐      ┌─────────────────────────┐
│                                          │ ⟋─10 │   Dispositif de détection │
│            Unité de contrôle             │◄─    │     d'un état de masse    │
│                                          │◄──── │     excessive du véhicule │
└─────────────────────────────────────────┘      └─────────────────────────┘
   12       ▲               │       ▲                          
    ⟋       │               ▼       │                        16
┌──────────────┐      ┌──────────────┐                         
│    Pédale     │      │ Batterie de  │ ⟋─14                   
│ d'accélérateur│      │   traction   │                         
└──────────────┘      └──────────────┘                         
```

[Fig. 2]

```
┌ ─ ─ ─ ─ ─ ─ ─ ─ ─ ─ ─ ─ ─ ─ ─ ─ ─ ─ ─ ─ ─ ┐
    ┌─────────────────────────────────┐
│   │      Sélection d'un nombre       │  18   │
    │  prédéterminé n de phases $P_i$  │
│   │      d'accélération du véhicule  │       │
    └─────────────────────────────────┘
│                    │                         │         D1
    ┌─────────────────────────────────┐                  ⟋
│   │ Calcul de la valeur moyenne de la│  E1   │
    │ force différentielle $F0_i$ du véhicule│
│   │       pour chaque phase $P_i$    │       │
    │   d'accélération sélectionnée     │
│   └─────────────────────────────────┘       │
                     │
│   ┌─────────────────────────────────┐  E2    │
    │  Calcul de la valeur statistique X0 │
│   └─────────────────────────────────┘       │
└ ─ ─ ─ ─ ─ ─ ─ ─ ─ ─ ─ ─ ─ ─ ─ ─ ─ ─ ─ ─ ─ ┘
                     │
┌ ─ ─ ─ ─ ─ ─ ─ ─ ─ ─ ─ ─ ─ ─ ─ ─ ─ ─ ─ ─ ─ ┐    G1
                     ▼                              ⟋
│              ╱╲  E3                          │
             ╱    ╲
│          ╱         ╲                         │
          ╱ Valeur statistique X0 > ╲
│        ╱  valeur de seuil SM0 de    ╲        │
         ╲  masse excessive du        ╱
│          ╲      véhicule          ╱          │
             ╲                    ╱
│              ╲╱                             │
                     │ OUI                20
│                    ▼                    ⟋    │
    ╭─────────────────────────────────╮
│   │ Augmentation du niveau d'énergie │       │
    │ stockée dans la batterie de traction │
│   │  du véhicule en état de masse   │       │
    │        excessive M1              │
│   ╰─────────────────────────────────╯       │
└ ─ ─ ─ ─ ─ ─ ─ ─ ─ ─ ─ ─ ─ ─ ─ ─ ─ ─ ─ ─ ─ ┘
```

[Fig. 3]

[Fig. 4A]

[Fig. 4B]

[Fig. 4C]

**RÉFÉRENCES CITÉES DANS LA DESCRIPTION**

**Documents brevets cités dans la description**

- FR 2822972